# EUROPÄISCHE PATENTSCHRIFT

(11) **EP 2 321 159 B1**
(45) Veröffentlichungstag und Bekanntmachung des Hinweises auf die Patenterteilung: **14.11.2012**
(21) Anmeldenummer: 09779992.8
(22) Anmeldetag: 29.06.2009
(51) Int. Cl.: B60S 1/38

(54) **WISCHBLATT**
WIPER BLADE
BALAI D ESSUIE-GLACE

(30) Priorität: 23.09.2008 DE 102008042280; 07.08.2008 DE 102008041065
(43) Veröffentlichungstag der Anmeldung: 18.05.2011
(73) Patentinhaber: Robert Bosch GmbH, 70442 Stuttgart (DE)
(72) Erfinder: WILMS, Christian, B-3582 Koersel-Beringen (BE); BRATEC, Herve, B-3012 Wilsele (BE)
(86) Internationale Anmeldenummer: PCT/EP2009/058083
(87) Internationale Veröffentlichungsnummer: WO 2010/015462

(56) Entgegenhaltungen:
- WO-A-02/087935
- DE-A1- 10 036 122
- DE-A1- 10 044 913
- DE-A1-102006 024 664
- JP-A- 2008 296 808
- US-A1- 2007 174 989

## Beschreibung

### Stand der Technik

Die Erfindung geht aus von einem Wischblatt nach der Gattung des Hauptanspruchs. Bei solchen Wischblättern mit einem langgestreckten, federelastischen Tragelement soll dieses über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende formgebende Krümmung des unbelasteten Tragelements - also wenn das Wischblatt nur mit seinen beiden Enden an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung, weil während des Wischbetriebs die Wischleiste, beziehungsweise deren an der Scheibe anliegende Wischlippe, stets mit einer bestimmten Kraft gegen die Scheibe drücken muss. Das Tragelement ersetzt somit die aufwändige Tragbügelkonstruktion mit zwei in der Wischleiste angeordneten Federschienen, wie sie bei älteren Wischblättern praktiziert wurde, weil das Tragelement neben der Verteilung des Anpressdrucks auch die notwendige Querversteifung der gummielastischen Wischleiste bewirkt.

Zur Erhöhung des Anpressdrucks insbesondere bei höheren Fahrzeuggeschwindigkeiten ist es bei solchen Wischblättern beispielsweise aus der WO 02/087935 bekannt, auf dem Tragelement einen Spoiler anzuordnen. Dieser Spoiler erstreckt sich dann entlang des Tragelements und übergreift das Tragelement haubenförmig. Die Vorteile des Spoilers gehen aber einher mit Nachteilen, insbesondere bei sehr hohen Geschwindigkeiten, bei denen sich Verwirbelungen hinter dem Spoiler einstellen und einen, die gerade trocken gewischte Scheibe wieder benetzenden Sprühnebel erzeugen. Ein einfaches Reduzieren der Bauhöhe wird zwar in Erwägung gezogen, reduziert jedoch die Wirkung des Spoilers im mittleren Geschwindigkeitsbereich.

DE-A-10036122 offenbart den Oberbegriff des Ansprunchs 1.

### Offenbarung der Erfindung

### Vorteile der Erfindung

Wischblätter nach der Gattung des Hauptanspruchs, wobei der Spoiler mindestens eine erste und eine zweite im wesentlichen ebenen Fläche aufweist, die unter einem Winkel zueinander angeordnet sind und die im eingebauten Zustand ein gemeinsames Anströmprofil bilden, zeichnen sich durch eine hohe Effektivität auch im mittleren Geschwindigkeitsbereich aus und vermeiden darüber hinaus auch bei hohen Geschwindigkeiten einen Sprühnebel zu erzeugen. Im Wesentlichen ebene Flächen bedeuteten dabei, dass die bei elastischen Materialien übliche Fertigungstoleranzen sowie in geringem Maße gestalterische Freiheiten erlaubt sind. Außerdem überlagert sich diesen "ebenen Flächen" die Krümmung des Wischblatts entlang deren Längserstreckung.

Als zusätzlicher Effekt konnte durch diese Maßnahme eine Reduzierung des sogenannten "Water-Pull-Back"-Effekt erzielt werden. Dieser Effekt bezeichnet das Zurückziehen des an der A-Säule am Umkehrpunkt des Wischblatts abgelegten Wassers in die reversierte Wischbewegung und damit in das Wischfeld des Fahrers. Durch den durch die beiden Flächen definierten Knick wird die durch den Fahrtwind erzeugte Luftströmung im mittleren Bereich des Wischfeldes stärker abgelenkt und im Umkehrpunkt des Wischblatts besser kanalisiert. Der Knick ist somit ursächlich für die Verbesserung der Luftströmung in den genannten Bereichen und damit für die Verbesserung der Wischqualität des erfindungsgemäßen Wischblatts.

Nach der Erfindung wird das Strömungsverhalten weiter verbessert, wenn eine dritte Fläche an mindestens eine der ersten oder zweiten Fläche angrenzt und mit dieser einen einen weiteren Knick erzeugenden Winkel einschließt.

In vorteilhafter Weise geht mindestens eine der ebenen Flächen in eine bogenförmige Fläche über und bildet damit einen Auflaufbereich, der die Luftströmung über der Scheibe aufnimmt und auf die eine oder die beiden anderen Flächen leitet. Im optimalen Fall geschieht dies durch eine lamminare Strömung. Der Übergang kann dabei aus Designgründen kontinuierlich oder ebenfalls mit einem Knick erfolgen.

Insbesondere die Bauhöhe kann dadurch reduziert werden, dass eine der Flächen parallel zu einer vom Tragelement definierten oberen Bandfläche ausgebildet ist. Strömungsgünstig ist es, wenn eine der Flächen senkrecht zur oberen Bandfläche des Tragelements steht. Diese Fläche lenkt den Luftstrom in die oberen, vom Wischblatt unbeeinflussten Luftströmungsschichten und kann wie eine Abrisskante wirken.

Der Spoiler erstreckt sich üblicherweise entlang des Tragelements zu einer beziehungsweise beiden Seiten eines in einem Mittelbereich angebrachten Anschlusses für den Wischerarm. Die den bzw. die Winkel einschließenden Flächen erstrecken sich dann entlang eines wesentlichen Teils der Spoiler-Längserstreckung. Wesentlich bedeutet dabei, dass an den Spoiler in dem im Bereich des Anschlusses für den Wischerarm bzw. an den äußeren Wischblattenden Strömungs- und/oder Designelemente angebracht sein können, die Einfluss auf die Längserstreckung der Flächen nehmen.

Fertigungstechnisch günstig ist es, wenn mindestens eine der Flächen beziehungsweise alle Flächen als Seiten jeweils einer Wand mit einer im Wesentlichen konstanten Wanddicke angeordnet ist/sind. Damit erhalten die Flächen eine Eigenstabilität, mit der sie den Strömungskräften entgegenstehen und trotzdem eine gewisse Flexibilität bewahren, um der Biegebewegung des Tragelements während der Wischbewegung folgen zu können.

Nach der Erfindung ist eine der Flächen als Strebe ausgebildet, die die beiden anderen Flächen gegeneinander verstrebt. Die durch die Stäbe miteinander verbundenen Flächen können dann senkrecht zueinander stehen und die Winkel respektive die Knicke bilden sich an den Verbindungsstellen zwischen den Flächen und der Strebe aus.

Wird Nach der Erfindung die Strebe entsprechend schlank gefertigt, bildet sich zwischen der Strebe und den beiden abgestürzten Flächen ein Hohlraum aus. Insbesondere bei der Montage des Spoilers auf das Tragelement ist dies von Vorteil, weil der Spoiler quer zu seiner Längserstreckung elastisch über das Tragelement gestülpt werden kann.

Durch die vorteilhafte Ausbildung des Spoilers kann dieser das Tragelement sowie einen mit dem Tragelement verbundenen Wischleistenkopf der Wischleiste umgreifen und damit einen kompakten Aufbau gewährleisten. Falls es notwendig ist, kann auch ein gewisser Abstand zwischen dem Wischleistenkopf und dem Spoiler belassen werden, um Reibung zwischen diesen Teilen zu vermeiden. Der Spoilerkörper ist dann ebenfalls wandartig und der Aufbau erhöht sich damit nur unwesentlich.

Werden an die gebildeten Wände Längskragen angeformt, die ihrerseits Aufnahmenuten aufweisen, in die Enden des Tragelements ragen können, wird dadurch ein einfacher Halt des Spoilers auf dem Tragelement erreicht.

### Zeichnung

In der Zeichnung sind vorteilhafte Ausführungsbeispiele des erfindungsgemäßen Wischblatts gezeigt und in der nachfolgenden Beschreibung näher erläutert. Es zeigen:
- Fig. 1: ein Wischblatt in Schrägansicht,
- Fig. 2: ein Wischblatt in einem Schnitt nach Linie II-II in Fig. 1,
- Fig. 3: ein weiteres nicht beanspruchtes Ausführungsbeispiel zu einem Spoiler nach Fig. 2,
- Fig. 4: ein weiteres Ausführungsbeispiel eines Spoilers in Schrägdarstellung und
- Fig. 5: ein Wischfeld auf einer Windschutzscheibe.

### Beschreibung der Ausführungsbeispiele

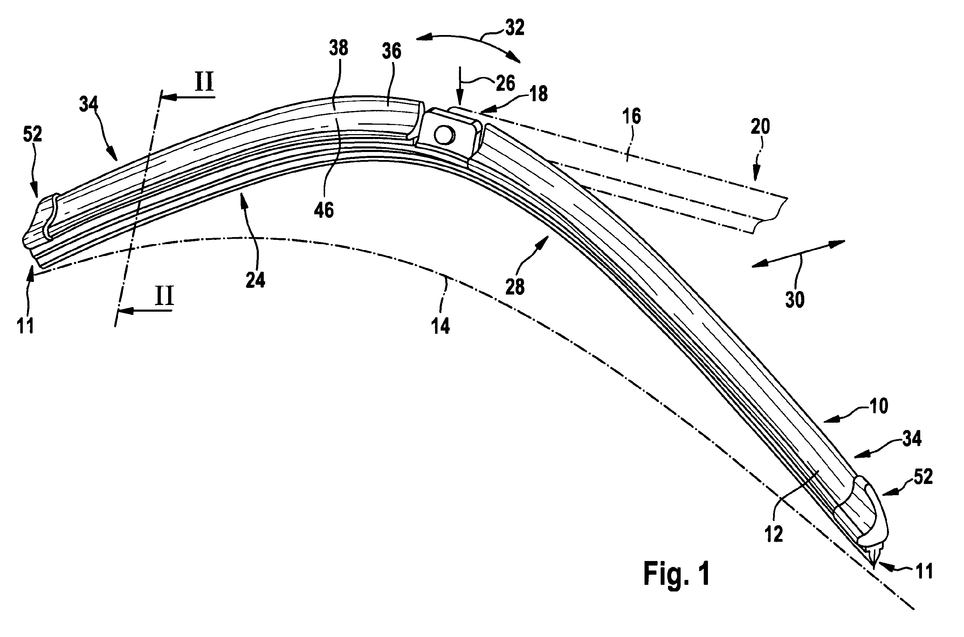

Ein in Fig. 1 dargestelltes Wischblatt 10 weist ein bandartig langgestrecktes, federelastisches, ein- oder mehrteiliges Tragelement 12 auf, welches in unbelastetem Zustand in Längsrichtung gekrümmt ist. An der von der zu wischenden Scheibe 14 abgewandten konvexen oberen bzw. äußeren Bandseite 16 (Fig. 1) des Tragelements ist in dessen Mittelabschnitt eine beispielsweise flächig an dieser anliegende Anschlussvorrichtung 18 angeordnet, mit deren Hilfe das Wischblatt 10 mit einem an der Karosserie eines Kraftfahrzeugs geführten, angetriebenen Wischerarm 20 lösbar verbunden werden kann. An der der Scheibe zugewandten konkaven unteren beziehungsweise inneren Bandfläche oder Bandseite 22 des gekrümmten Tragelements 12 ist eine langgestreckte, gummielastische Wischleiste 24 angeordnet, die sich längsachsenparallel zum Tragelement 12 erstreckt.

An dem freien Ende des Wischarms sind nicht näher dargestellte Gegenanschlussmittel vorgesehen, welche mit der Anschlussvorrichtung 18 des Wischblatts im Sinne eines Gelenks zusammenwirken. Der Wischerarm 20 und damit auch das Wischblatt 10 sind in Richtung des Pfeiles 26 zur zu wischenden Scheibe 14 belastet, deren zu wischende Oberfläche in Fig. 1 durch die strichpunktierte Linie angedeutet ist. Da die strichpunktierte Linie die stärkste Krümmung der Scheibenoberfläche darstellen soll, ist klar ersichtlich, dass die Krümmung des mit seinen Enden 11 an der Scheibe 14 anliegenden, noch unbelastetem Wischblatts 10 stärker ist, als die maximale Scheibenkrümmung. Es hat - unbelastet - also gegenüber der Scheibe 14 einen konkaven Verlauf.

Unter dem Anpressdruck (Pfeil 26) legt sich das Wischblatt 10 mit seiner die Wischarbeit verrichtenden Wischlippe 28 über seine gesamte Länge an der Scheibenoberfläche 14 an und geht in eine der Strecklage angenäherte Arbeitslage über. Dabei baut sich im bandartigen, federelastischen Tragelement 12 eine Spannung auf, welche für eine ordnungsgemäße Anlage der Wischleiste 24 beziehungsweise der Wischlippe 28 über deren gesamte Länge an der Scheibe 14 sorgt. Weil die in aller Regel sphärisch gekrümmte Scheibe nicht einen Abschnitt einer Kugeloberfläche darstellt, muss sich das Wischblatt 10 gegenüber dem Wischarm 20 während seiner Wischbewegung (Doppelpfeil 30) ständig der jeweiligen Lage und dem Verlauf der Scheibenoberfläche 14 anpassen können. Deshalb ist die eine Schwingbewegung (Doppelpfeil 32) um die Gelenkachse der Anschlussverbindung ermöglichende gelenkige Verbindung zwischen Wischerarm 20 und Wischblatt 10 notwendig.

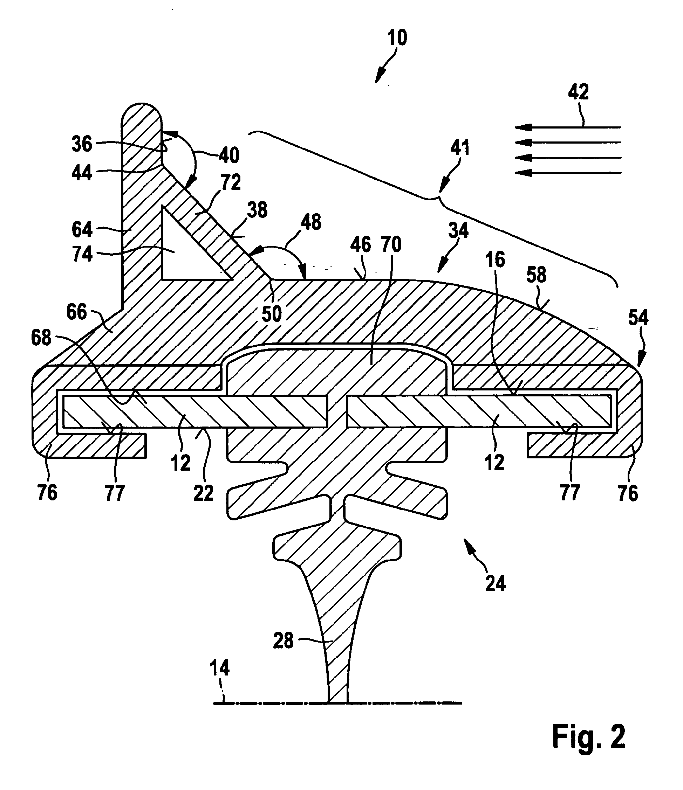

In Fig. 2 ist ein Schnitt nach Linie II-II in Fig. 1 dargestellt. Es ist zu erkennen, dass das Tragelement 12 neben der Wischleiste 14 auch einen Spoiler 34 trägt, der im Wesentlichen oberhalb der oberen Bandseite 16 angeordnet ist. Der Spoiler 34 weist eine erste Fläche 36 sowie eine zweite Fläche 38 auf, die unter einem Winkel 40 zueinander angeordnet sind und im eingebauten Zustand ein gemeinsames Anströmprofil 41 gegenüber dem vom Fahrtwind erzeugten Luftstrom 42 bilden. Am Scheitel des Winkels 40, der im Wesentlichen als Knick 44 ausgebildet ist, wird der Luftstrom 42 stark in seiner Richtung abgelenkt, wodurch neben dem erzeugten Anpressdruck auf die Scheibe 14 auch mitgerissene Wassertropfen von der Scheibe weg gelenkt werden. Die Größe des Winkels 40 sowie die Ausbildung eines mehr oder weniger scharfen Knicks 44 beeinflussen das Wirbelverhalten des Luftstrom 42 nach dem Verlassen des Anströmprofils 41 der Art, dass ein stärker ausgebildeter Knick 44 bei gegebenem Winkel 40 die Wischqualität verbessert. Selbstverständlich sind hier Fertigungstoleranzen zu berücksichtigen, so dass letztendlich ein möglichst kleiner Radius im Bereich des Knicks 44 angestrebt wird.

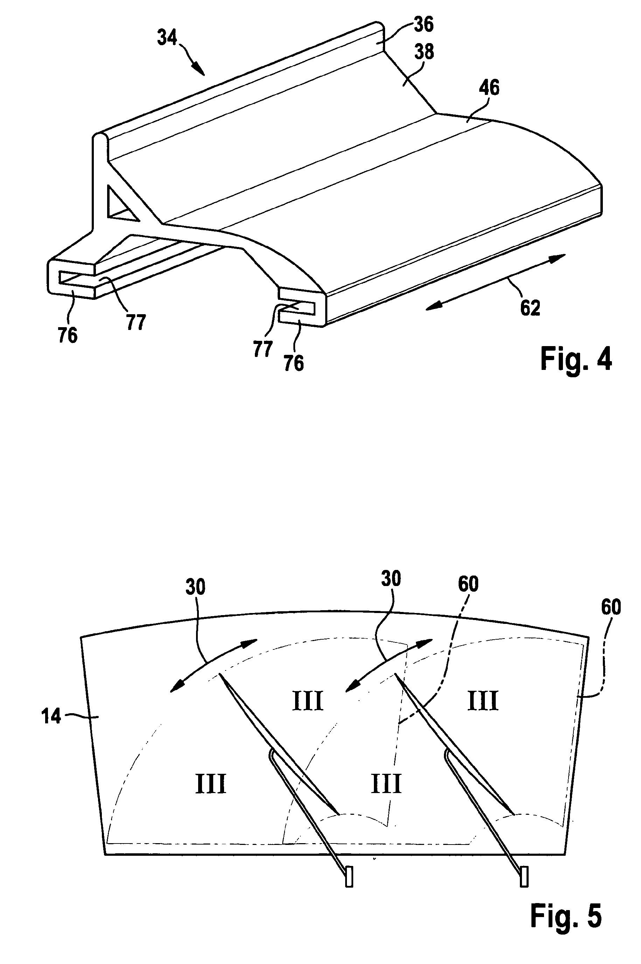

Die in Fig. 2 dargestellten Luftströmungsverhältnisse treten in den Regionen III in Fig. 5 bevorzugt auf. Dort wirkt eine senkrechte Komponente des Luftstroms 42 auf den Spoiler 34 und kann bei bekannten Wischblättern nach dem Stand der Technik zu einem Sprühnebel führen, der sich als kleine Wassertropfen auf der Scheibe 14 in den Regionen III niederlegt. Dieser Effekt ist insbesondere in der Abwärtswischbewegung unerwünscht.

Das Anströmprofil 41 wird optimiert durch eine dritte Fläche 46, die an mindestens eine der beiden anderen Flächen angrenzt und mit dieser einen Winkel einschließt. Im Ausführungsbeispiel nach Fig. 2 grenzt die dritte Fläche 46 an die zweite Fläche 38 und schließt mit dieser einen Winkel 48 ein. Am Scheitelpunkt des Winkels 48 ist ein Knick 50 gebildet, dessen innerer Radius ähnlichen Gesetzmäßigkeiten genügen muss, wie der des Knicks 44.

Die dritte Fläche 46, erstreckt sich wie die erste Fläche 36 und die zweite Fläche 38 entlang der Längserstreckung des Spoilers 34, wie das in Fig. 1 erkennbar ist. An den äußeren Enden 11 mündet der Spoiler 34 und damit auch die Flächen 36, 38, 46 in Endkappen 52 und werden von diesen aufgenommen, wobei die Endkappen 52 so geformt sind, dass sich das Anströmprofil 41 nach außen fortsetzt. Im Bereich der Anschlussvorrichtung 18 ist der Spoiler 34 unterbrochen. Auch hier können Abdeckelemente vorgesehen sein, die das Anströmprofil mit aufnehmen.

Quer zur Längserstreckung zeigt die dritte Fläche 46 einen bogenförmigen Verlauf, der sich an einen ebenen Verlauf im Bereich des Knicks 50 anschließt und bis zu einer vorderen Anströmseite 54 erstreckt. Dieser bogenförmige Verlauf kann als eine weitere, vierte Fläche 58 interpretiert werden, die sich an die Ebene der Fläche 46 anschließt. Dadurch wird zumindest die senkrechte Komponente des durch den Fahrtwind erzeugten Luftstroms 42 ausgehend von der Anströmseite 54 über den bogenförmigen Verlauf der dritten Fläche 46 auf die beiden Flächen 38 und 36 geführt. Durch die beiden Knicke 50 und 44 findet dann ein scharfes zweifaches Umlenken in eine Richtung mit einer senkrecht zur Scheibe 14 stehenden Komponente statt. Der Luftstrom 42 wird dabei vom bogenförmigen Verlauf der dritten Fläche 46 aufgenommen und im wesentlichen lamminar über deren Ebenenbereich geführt, der im wesentlichen parallel zur oberen Bandseite 16 des Tragelements 12 ausgebildet ist. Die zweifache Umlenkung an den beiden Knicke 50 und 44 bewirkt, dass sich die Luftströmung 42 direkt über dem Wischblatt mit der darüber liegenden, unbeeinflusst Luftströmung so vermischt, dass sich der Sprühnebel in geringerem Maße oder überhaupt nicht mehr auf die Scheibe legt.

Im Bereich der oberen Umkehrpunkte 60 wirken die Fläche in 36,38 und 46 wie ein Strömungskanal, an dem die Luft lamminar und weit gehend ungehindert entlang strömen kann. Dadurch entsteht eine Art Luftvorhang, der ein Zurückziehen des an den Umkehrpunkten 60 abgelegten Regenwassers vermindert.

Wie in den Figuren 2 und 4 zu sehen ist, erstrecken sich die Flächen 36, 38 und 46 entlang der Längserstreckung (Pfeil 62) des Spoilers 34, wobei die dritte Fläche 46 ungefähr parallel zur oberen Bandseite 16 angeordnet ist. Die erste Fläche 36 steht ungefähr senkrecht zur oberen Bandseite 16 und damit ebenfalls etwa senkrecht auf die Fläche 46.

Die erste Fläche 36 ist Teil einer Wand 64, die einen hinteren Teil des Spoilers 34 bildet. Die Wand 64 hat eine im Wesentlichen konstante Dicke und steht auf einem Spoilerkörper 66, an dessen Oberseite die dritte Fläche 46 ausgebildet ist. Der Spoilerkörper schmiegt sich mit seiner Unterseite 68 an die obere Bandseite 16 an und nimmt einen Wischleistenkopf 70 der Wischleiste 24 auf.

Die zweite Fläche 38 ist Teil einer Strebe 72, die zwischen einem oberen Bereich der Wand 64 und dem Spoilerkörper 66 angeordnet ist. Sie verstärkt damit den Halt der Wand 64, deren Wanddicke deshalb geringer ausgebildet sein kann als ohne Strebe 72. Unterhalb der Strebe 72 bildet sich ein Hohlraum 74 von im Querschnitt dreieckförmiger Gestalt aus. Der Hohlraum 74 kann mit einem weichen Material wie beispielsweise Moosgummi gefüllt sein oder auch ein Heizelement aufnehmen.

Am Spoilerkörper 66 sind das Tragelement 12 an dessen Außenseiten umgreifende Längskragen 76 angeformt. Sie können aus dem gleichen Material bestehen wie der restliche Spoiler 34 (Fig. 4) oder aus einem anderen beispielsweise härteren Material, wie in Fig. 2 dargestellt. Die Längskragen 76 weisen Aufnahmenuten 77 auf, in die die längsverlaufenden Enden des Tragelements 12 ragen.

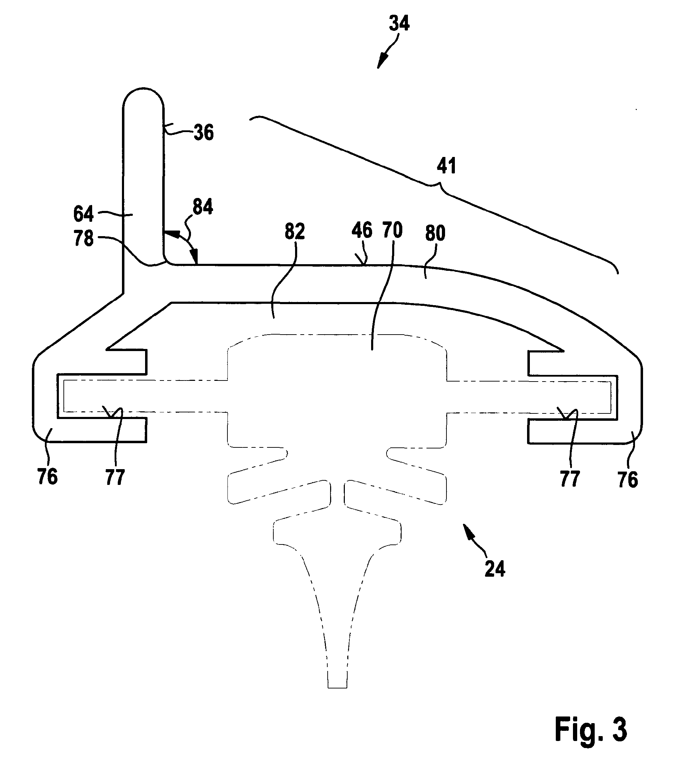

Ein weiteres nicht beansprunchtes Ausfuhrungsbeispiel ist in Fig. 3 dargestellt, wobei gleiche Teile mit gleichen Bezugsziffern belegt sind. Der dargestellte Spoiler 34 weist eine erste Fläche 36 auf, die direkt an die im Ausführungsbeispiel nach Fig. 2 benannte dritte Fläche 46 angrenzt. Zwischen den Flächen 36 und 46 ist ein Knick 78 ausgebildet, der analog zu den vorgenannten Knicken 44 und 50 möglichst scharf sein sollte, Fertigungs- und oder Design begründet aber einen Radius aufweisend wird. Da hier eine die Wand 64 abstützende Strebe nicht vorhanden ist, wird die Wanddicke stärker ausgelegt. Die beiden Flächen 36 und 46 stehen zumindest annähernd senkrecht aufeinander, so dass ein in etwa rechter Winkel 84 eingeschlossen wird. In diesem Ausführungsbeispiel ist die dritte Fläche 46 Teil einer Wand 80 mit einer definierten Wandstärke. Zwischen der Wand 80 und dem Wischleistenkopf ist ein Hohlraum 82 ausgebildet, so dass der Spoiler 34 den Wischleistenkopf 70 mit Abstand umgreift.

Die in den unterschiedlichen Ausführungsbeispielen gezeigten Merkmale sind nicht auf die Ausführungsbeispiele als solches begrenzt sondern können untereinander ausgetauscht und kombiniert werden.

## Patentansprüche

1. Wischblatt (10) mit mindestens einem langgestreckten Trageelement (12), an dem eine Wischleiste (24) sowie ein Spoiler (34) entlang seiner Längserstreckung angeordnet sind, wobei der Spoiler (34) mindestens eine erste und eine zweite im wesentlichen ebene Fläche (36, 38, 46, 58) aufweist, die unter einem Winkel (40, 48, 84) zueinander angeordnet sind und die im eingebauten Zustand ein gemeinsames Anströmprofil (41) bilden, wobei eine dritte Fläche (36, 38, 46, 58) an mindestens eine der beiden anderen angrenzt, mit dieser mindestens einen Fläche (36, 38, 46, 58) einen Winkel (40, 48) einschließt und im eingebauten Zustand das gemeinsame Anströmprofil bildet, **dadurch gekennzeichnet, dass** mindestens eine Fläche (36, 38, 46, 58) eine Strebe (72) bildet, die die beiden anderen Flächen (36, 38, 46, 58) gegeneinander abstützt, wobei zwischen der Strebe (72) und den beiden anderen Flächen (36, 38, 46, 58) ein Hohlraum (74) ausgebildet ist.

2. Wischblatt (10) nach einem der vorhergehenden Ansprüche, **dadurch gekennzeichnet, dass** mindestens eine der Flächen (36, 38, 46, 58) in eine bogenförmige Fläche übergeht.

3. Wischblatt (10) nach einem der vorhergehenden Ansprüche, **dadurch gekennzeichnet, dass** das Tragelement (12) eine obere Bandfläche (16) aufweist und eine der Flächen (36, 38, 46, 58) parallel zur oberen Bandfläche (16) angeordnet ist.

4. Wischblatt (10) nach einem der vorhergehenden Ansprüche, **dadurch gekennzeichnet, dass** das Tragelement (12) eine obere Bandfläche (16) aufweist und eine der Flächen (36, 38, 46, 58) senkrecht zur oberen Bandfläche (16) angeordnet ist.

5. Wischblatt (10) nach einem der vorhergehenden Ansprüche, **dadurch gekennzeichnet, dass** sich die Flächen (36, 38, 46, 58) über mindestens einen wesentlichen Teil entlang einer Spoiler-Längserstreckung erstrecken.

6. Wischblatt (10) nach einem der vorhergehenden Ansprüche, **dadurch gekennzeichnet, dass** mindestens eine Fläche (36, 38, 46, 58) an einer Seite einer Wand (64, 80) mit einer insbesondere im Wesentlichen konstanten Wanddicke angeordnet ist.

7. Wischblatt (10) nach einem der vorhergehenden Ansprüche, **dadurch gekennzeichnet, dass** die Wischleiste (24) einen mit dem Tragelement (12) verbundenen Wischleistenkopf (70) aufweist und mindestens eine Wand (64, 80) das Tragelement (12) und den Wischleistenkopf (70) umgreift.

8. Wischblatt (10) nach Anspruch 7, **dadurch gekennzeichnet, dass** der Spoiler (34) den Wischleistenkopf (70) mit Abstand umgreift.

9. Wischblatt (10) nach einem der vorhergehenden Ansprüche, **dadurch gekennzeichnet, dass** der Spoiler (34) Längskragen (76) aufweist, die Aufnahmenuten aufweisen, in die Enden des Tragelements (12) ragen.

## Claims

1. Wiper blade (10) with at least one elongate supporting element (12) on which a wiper strip (24) and a spoiler (34) are arranged along the longitudinal extent thereof, wherein the spoiler (34) has at least one first and one second substantially planar surface (36, 38, 46, 58), which surfaces are arranged at an angle (40, 48, 84) to each other and, in the installed state, form a common approach-flow profile (41), wherein a third surface (36, 38, 46, 58) is adjacent to at least one of the two other surfaces, encloses an angle (40, 48) with said at least one surface (36, 38, 46, 58) and, in the installed state, forms the common approach-flow profile, **characterized in that** at least one surface (36, 38, 46, 58) forms a strut (72) which supports the two other surfaces (36, 38, 46, 58) against each other, wherein a cavity (74) is formed between the strut (72) and the two other surfaces (36, 38, 46, 58).

2. Wiper blade (10) according to Claim 1, **characterized in that** at least one of the surfaces (36, 38, 46, 58) merges into a curved surface.

3. Wiper blade (10) according to either of the preceding claims, **characterized in that** the supporting element (12) has an upper band surface (16) and one of the surfaces (36, 38, 46, 58) is arranged parallel to the upper band surface (16).

4. Wiper blade (10) according to one of the preceding claims, **characterized in that** the supporting element (12) has an upper band surface (16) and one of the surfaces (36, 38, 46, 58) is arranged perpendicularly to the upper band surface (16).

5. Wiper blade (10) according to one of the preceding claims, **characterized in that** the surfaces (36, 38, 46, 58) extend over at least a substantial part along a spoiler longitudinal extent.

6. Wiper blade (10) according to one of the preceding claims, **characterized in that** at least one surface (36, 38, 46, 58) is arranged on a side of a wall (64, 80) having an in particular substantially constant wall thickness.

7. Wiper blade (10) according to one of the preceding claims, **characterized in that** the wiper strip (24) has a wiper strip head (70) connected to the supporting element (12) and at least one wall (64, 80) engages around the supporting element (12) and the wiper strip head (70).

8. Wiper blade (10) according to Claim 7, **characterized in that** the spoiler (34) engages around the wiper strip head (70) at a distance.

9. Wiper blade (10) according to one of the preceding claims, **characterized in that** the spoiler (34) has longitudinal collars (76) which have receiving grooves into which ends of the supporting element (12) project.

## Revendications

1. Balai d'essuie-glace (10) comprenant au moins un élément de support allongé (12) sur lequel sont disposés une raclette de balai d'essuie-glace (24) ainsi qu'un déflecteur (34) le long de son étendue longitudinale, le déflecteur (34) comprenant au moins une première et une deuxième surface essentiellement plane (36, 38, 46, 58) qui sont disposées suivant un angle (40, 48, 84) les unes par rapport aux autres et qui forment dans l'état monté un profil d'arrivée d'écoulement commun (41), une troisième surface (36, 38, 46, 58) étant adjacente à au moins l'une des deux autres et formant avec cette au moins une surface (36, 38, 46, 58) un angle (40, 48) et formant dans l'état monté le profil d'arrivée d'écoulement commun, **caractérisé en ce qu'**au moins une surface (36, 38, 46, 58) forme un renfort (72) qui supporte l'une contre l'autre les deux autres surfaces (36, 38, 46, 58), une cavité (74) étant réalisée entre le renfort (72) et les deux autres surfaces (36, 38, 46, 58).

2. Balai d'essuie-glace (10) selon la revendication 1, **caractérisé en ce qu'**au moins l'une des surfaces (36, 38, 46, 58) se prolonge en une surface arquée.

3. Balai d'essuie-glace (10) selon l'une quelconque des revendications précédentes, **caractérisé en ce que** l'élément de support (12) comprend une surface de bande supérieure (16) et l'une des surfaces (36, 38, 46, 58) est disposée parallèlement à la surface de bande supérieure (16).

4. Balai d'essuie-glace (10) selon l'une quelconque des revendications précédentes, **caractérisé en ce que** l'élément de support (12) comprend une surface de bande supérieure (16) et l'une des surfaces (36, 38, 46, 58) est disposée perpendiculairement à la surface de bande supérieure (16).

5. Balai d'essuie-glace (10) selon l'une quelconque des revendications précédentes, **caractérisé en ce que** les surfaces (36, 38, 46, 58) s'étendent sur au moins une partie considérable le long d'une étendue longitudinale du déflecteur.

6. Balai d'essuie-glace (10) selon l'une quelconque des revendications précédentes, **caractérisé en ce qu'**au moins une surface (36, 38, 46, 58) est disposée d'un côté d'une paroi (64, 80) présentant une épaisseur de paroi en particulier essentiellement constante.

7. Balai d'essuie-glace (10) selon l'une quelconque des revendications précédentes, **caractérisé en ce que** la raclette de balai d'essuie-glace (24) comprend une tête de raclette de balai d'essuie-glace (70) reliée à l'élément de support (12) et au moins une paroi (64, 80) vient en prise autour de l'élément de support (12) et de la tête de raclette de balai d'essuie-glace (70).

8. Balai d'essuie-glace (10) selon la revendication 7, **caractérisé en ce que** le déflecteur (34) vient en prise à distance autour de la tête de raclette de balai d'essuie-glace (70).

9. Balai d'essuie-glace (10) selon l'une quelconque des revendications précédentes, **caractérisé en ce que** le déflecteur (34) comprend des rebords longitudinaux (76) qui comprennent des rainures de réception dans lesquelles font saillie les extrémités de l'élément de support (12).
